# EUROPEAN PATENT SPECIFICATION

(11) **EP 1 213 479 B1**
(45) Date of publication and mention of the grant of the patent: **12.03.2003**
(21) Application number: 00403469.0
(22) Date of filing: 11.12.2000
(51) Int. Cl.: F04B 53/14, F04B 53/22

(54) **High pressure low volume pump**
Hochdruckpumpe mit geringem Förderstrom
Pompe à haute pression à faible debit

(43) Date of publication of application: 12.06.2002
(73) Proprietor: Gilson, Inc., Middleton, Wisconsin 53562 (US)
(72) Inventor: Cautenet, Etienne, 95410 Groslay (FR); de Talhouet, Philippe, 75116 Paris (FR)
(74) Representative: Texier, Christian

(56) References cited:
- EP-A- 0 606 980
- US-A- 5 664 938
- US-A- 5 788 465
- PATENT ABSTRACTS OF JAPAN vol. 1995, no. 11, 26 December 1995 (1995-12-26) -& JP 07 197880 A (SHIMADZU CORP), 1 August 1995 (1995-08-01)

## Description

### Field of the Invention

The present invention relates to an improved high pressure low volume pump suitable for use in high pressure liquid chromatography.

### Description of the Prior Art

There is a need for a pump that can accurately deliver precisely measured, very small volumes of liquid at very high pressures. For example, in performing high pressure liquid chromatography (HPLC) procedures, a motor driven pump is typically used to deliver liquid solvents such as methanol, isopropyl alcohol and the like. The trend is to use smaller volumes of solvent for the mobile phase of the chromatography column and to operate at higher pressures. For example, it would be desirable to provide a pump that can deliver fluids at low flow rates in the range of from about 50 to about 250 microliters per minute at pressures of several hundred bars.

A piston pump designed for such low flow volumes is necessarily delicate because the liquid handling components of the pump must be very small in size. Low volume HPLC pumps can benefit from the use of a small diameter piston made of sapphire or zircon or the like, because such materials can be provided to close dimensional and surface tolerances in very small sizes. However a problem exists because this material is fragile and easily broken. It is difficult to avoid breakage of a small and delicate piston during assembly and operation of the high pressure low volume pump.

US patent 5,788,465 discloses a pump head configuration including an elongated piston interconnected to a drive system by means of a ball and socket connection including a spherical member pivotally received in a socket. However the ball is retained mechanically by cams 34.

Japanese patent abstract publication No. 0719880 dated 01-08-95 discloses a plunger type liquid supply pump having a plunger with a flat end held by the flat end of a permanent magnet in a plunger holder. This publication relies solely on the flat contact between the magnet and the flat end of the plunger for retention.

### Summary of the Invention

A principal object of the present invention is to provide an improved high pressure low volume pump capable of providing accurately metered flows of liquids in the nanoliters per minute range at pressures as high as several hundred bars. Further objects are to provide a pump that can employ a very small piston made of a fragile material while overcoming the problem of breakage of the piston during assembly and operation of the pump; to provide a pump in which the need for mechanical piston retention, for example by a spring, is avoided; to provide a pump which does not require precise and expensive alignment of the piston with the piston drive system; and to provide a high pressure low volume pump overcoming the disadvantages of pumps that have been used in the past.

In brief, in accordance with the invention there is provided a high pressure low volume pump for high pressure liquid chromatography and the like. The pump includes a pumping section including a pump cylinder and passages for the flow of a pumped fluid into and out of the cylinder. A piston assembly includes a piston reciprocally movable in the cylinder and a piston holder supporting the piston at a first end of the piston holder. A piston drive system is connected between a motor and the second end of the piston holder for reciprocating the piston assembly in response to operation of the motor. The piston is an elongated slender rod having a diameter of less than about 10 millimeters. The interconnection of the drive system and the second end of the piston holder includes a ball-and-socket coupling with a spherical member pivotally received in a socket. A magnet in the socket holds the spherical member in the socket using magnetic force.

### Brief Description of the Drawing

The present invention together with the above and other objects and advantages may best be understood from the following detailed description of the preferred embodiment of the invention illustrated in the drawing, wherein:
FIG. 1 is a sectional view of a high pressure low volume pump constructed in accordance with the present invention, taken along the major axis of the pump; and
FIG. 2 is an enlarged sectional view of the piston assembly and drive system of the pump of FIG. 1.

### Detailed Description of the Preferred Embodiments

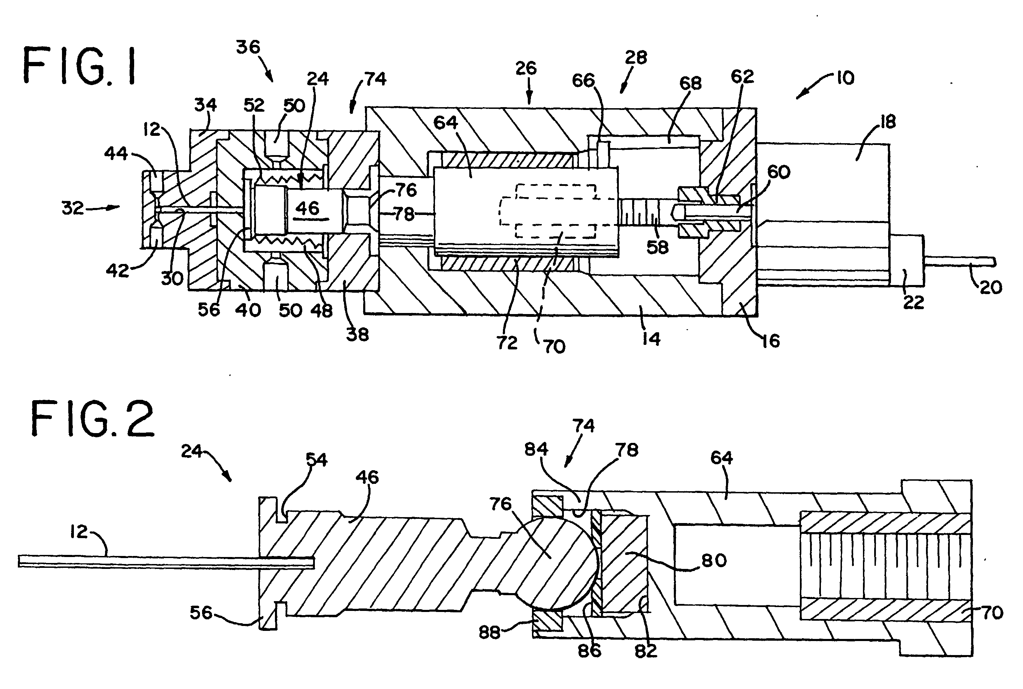

Having reference now to the drawing, in FIG. 1 there is illustrated a high pressure low volume pump generally designated as 10 and constructed in accordance with the principles of the present invention. The pump 10 is useful for providing a solvent liquid mobile phase in high pressure liquid chromatographic procedures, and is capable of pumping solvents such as methanol, isopropyl alcohol, acetonitrile and others at low flow rates in the range of from about 50 to about 250 microliters per minute at pressures of up to at least six hundred bars.

In order to achieve these desirable performance characteristics, the pump 10 includes a piston 12 in the form of an elongated slender rod having a diameter of less than about ten millimeters, and preferably having a diameter in the range of from about one to about three millimeters. The piston 12 is made of a crystalline material, preferably sapphire, or of a material having similar characteristics, such as a mineral, preferably zircon. The advantages of such materials is that they can be provided in the very small sizes needed for the present invention with precise tolerances and surface characteristics. A potential disadvantage of a piston 12 made of this material and size is that it is fragile and subject to breakage when the pump 10 is assembled and operated. The present invention overcomes this potential disadvantage and solves the problem of breakage of the pump piston 12.

Proceeding to a more detailed description of the pump 10, it includes a pump body 14 carrying an end cap 16 to which is secured a drive motor 18. Drive motor 18 is a stepper motor that can be precisely rotated under the control of a microprocessor that receives position feedback signals provided over a cable 20 from a detector 22 that receives signals from an encoder at the back of the motor 18.

A piston assembly 24 including the piston 12 is linearly reciprocated by a piston drive system 26 that is coupled to the motor 18 by a drive transmission 28 that converts rotary motion of the motor 18 to linear motion of the piston drive system 26 and piston assembly 24. The piston 12 reciprocates in a pumping cylinder 30 that is part of a pumping section 32 machined in a pump head 34 attached to a piston housing 36 including a cap 38 secured to the pump body 14 and a spacer body 40 between the cap 38 and the pump head 34.

The pumping section 32 in the pump head 34 includes a fluid inlet passage 42 and a fluid outlet passage 44, both communicating with the pump cylinder 30. There is sufficient clearance around the piston 12 for fluid to flow within the cylinder 30 along the surface of the piston 12, and the passages 42 and 44 may be located if desired at other points along the length of the cylinder, for example to permit inlet and outlet valves to be mounted directly within or on the pump head 34. An inlet flow valve (not shown) located at the pump head 34 or remote therefrom is opened to admit fluid to the passage 42 and cylinder 30 when the piston is moved out from the cylinder 30 (to the right as seen in FIG. 1). An outlet flow valve (not shown) located at the pump head 34 or remote therefrom is opened when the piston is moved into the cylinder 30 (to the left as seen in FIG. 1). The inlet and outlet flow valves can be check valves or microprocessor controlled valves such as solenoid valves. To provide continuous mobile phase flow in a HPLC system, an assembly of a plurality of valves 10 can be used so that outlet flow is provided by at least one valve 10 at all times.

The piston assembly 24 includes a piston holder 46 having an elongated, axially extending hole at one end into which the piston 12 is inserted and secured. The holder 46 reciprocates in a rinse chamber 48 within the spacer body 40. A rinse liquid flowing through rinse ports 50 can flow through the chamber 48. The pumped fluid is isolated from the rinse liquid by a collapsible bellows seal 52 having one end in a groove 54 in the piston holder 46 and another end captured between the cap 38 and spacer body 40. The fully extended position of the piston 12 seen in FIG. 1 is determined by engagement of a stop flange 56 of the holder 46 against the pump head 34.

Drive transmission 26 includes a threaded screw 58 that is axially aligned with and secured to a drive shaft 60 of motor 18 by a shaft coupling 62. The drive system 26 includes a hollow drive collar 64 axially receiving the drive screw 58. A radially extending projection 66 of the collar 64 is received in an axially extending slot 68 in the pump body 14 to prevent rotation of the drive collar 64. A threaded drive nut 70 is mounted within the collar 64 and mates with the drive screw 58. A bearing 72 supports the collar 64 for linear motion along the axis of the pump 10. When the motor 18 rotates the shaft 60, rotation of the screw 58 results in precisely controlled linear motion of the mating drive nut 70 and the drive collar 64.

In accordance with the invention a ball and socket connection 74 transmits drive force between the drive collar 64 and the piston holder 46. The end of the piston holder 46 opposite the piston 12 is spherical in shape to provide a coupling ball 76. The end of the drive collar 64 is provided with a socket 78 receiving the ball 76. The use of the ball and socket connection 74 avoids the need for exact alignment of the axis of the drive system 26 with the axis of movement of the piston assembly 24. The cost of precise tolerances is eliminated, and breakage of the piston 12 due to misalignment is prevented.

In order to retain the ball 76 within the socket 78 and to permit the drive system 26 to both push and pull the piston assembly, a magnet 80 is incorporated into the socket 78. The ball 78 is held by magnetic force rather than mechanically by a spring or other retention device. The socket 78 is generally cup shaped and includes a base wall 82 providing a nest for holding the magnet 80 and a side wall 84 surrounding the ball 76. The piston holder 46 including the ball 76 is formed of a magnetic, preferably ferrous, material attracted by the magnet 80. A nonmagnetic spacer 86, preferably of plastic, at the surface of the magnet 80 locates the ball 76 in close proximity to the magnet 80 and permits universal pivotal motion of the ball 76 in the socket 78. Although the magnet 80 can be of other materials, it is preferably a rare earth, neodymium-iron-boron magnet.

The magnetic retention force is maximized by a ring 88 of low magnetic reluctance material, such a soft iron, supported in the side wall 84 and surrounding the central plane of the ball 76. The ring 88 contributes to a low reluctance path including the magnet 80 and the ball 76 and increases the magnetic holding force by changing an open ended flux path to more of a closed flux path.

In assembling the pump 10, when the cap 38 is joined to the pump body 14, the ball 76 enters into the socket 78 and is urged by the magnet 80 to the fully seated position seen in FIG. 1. This is a gentle and smooth motion that does not apply shocks or stresses to the piston 12, thus avoiding breakage. If a mechanical retention system were used, the insertion of the piston 12 into the socket 78 would tend to cause breakage due to shocks and stresses arising from abrupt motions or from non axial forces applied to the piston holder 46.

While the present invention has been described with reference to the details of the embodiment of the invention shown in the drawing, these details are not intended to limit the scope of the invention as claimed in the appended claims.

## Claims

1. A high pressure low volume pump (10) for high pressure liquid chromatography and the like comprising: a pumping section (32) including a pump cylinder (30) ; passages (42, 44) for the flow of a pumped fluid into and out of said cylinder (30); a piston assembly (24) including a piston (12)reciprocally movable in said cylinder (30); said piston assembly (24) including a piston holder (46) supporting said piston (12) at a first end of said piston holder; a motor (18); a piston drive system (26) connected between said motor (18) and the second end of said piston holder (46) for reciprocating said piston assembly (24) in response to operation of said motor (18); said piston (12) being an elongated slender rod having a diameter of less than 10 millimeters; the interconnection of said drive system (26) and said second end of said piston holder (46) including a ball-and-socket- coupling (74) with a spherical member (76) pivotally received in a socket (78); said socket (78) being cup-shaped with a base (82) and a side wall (84) at least partly surrounding said spherical member (76), said pump (10) being **characterized by**: a magnet (80) in said socket (78) for holding said spherical member (76) in said socket (78) using magnetic force said magnet (80) being located in said base (78) adjacent to said spherical member, said socket (78) further including a ring (88) of low reluctance magnetic material supported in said side wall (84) and surrounding said spherical member (76).

2. A high pressure low volume pump as claimed in claim 1, said piston (12) being made of a crystalline material.

3. A high pressure low volume pump as claimed in claim 2 said piston (12) being made of sapphire.

4. A high pressure low volume pump as claimed in claim 1, said piston (12) being made of a mineral.

5. A high pressure low volume pump as claimed in claim 4, said piston (12) being made of zircon.

6. A high pressure low volume pump as claimed in claim 1, said spherical member (76) being said second end of said piston holder (46), and said socket (78) being part of said drive system (26).

7. A high pressure low volume pump as claimed in claim 6, said motor (18) including a rotatable drive shaft (60) and said drive system (26) including a drive transmission (28) for converting rotary shaft motion into linear motion of said socket (78).

8. A high pressure low volume pump as claimed in claim 7, said drive transmission (28) including a threaded shaft (58) rotatably driven by said motor drive shaft (60) and a threaded drive nut (70) carried by said drive system (26).

9. A high pressure low volume pump as claimed in claim 1, said piston (12) having a diameter in the range of from one millimeter to about three millimeters.

## Patentansprüche

1. Hochdruckpumpe (10) mit geringem Förderstrom für die Hochdruck-Flüssigkeitschromatographie und ähnlichem, mit: einem Pumpenabschnitt (32) mit einem Pumpzylinder (30); Durchgängen (42, 44) zum Durchströmen eines in und aus dem Zylinder (30) gepumpten Fluids; einem Kolbenaufbau (24), der einen in dem Zylinder (30) hin- und herbewegbaren Kolben (12) aufweist;
wobei der Kolbenaufbau (24) einen Kolbenhalter (46) aufweist, der den Kolben (12) an einem ersten Ende des Kolbenhalters trägt; einem Motor (18); einem Kolbenantriebssystem (26), das zwischen dem Motor (18) und dem zweiten Ende des Kolbenhalters (46) angeschlossen ist zur Hin- und Herbewegung des Kolbenaufbaus (24) in Reaktion auf den Betrieb des Motors (18); wobei der Kolben (12) eine längliche, dünne Stange mit einem Durchmesser von weniger als 10 mm ist; der Anschluß des Antriebssystems (26) und des zweiten Endes des Kolbenhalters (46) eine Kugelgelenkkopplung (74) aufweist, mit einem kugelförmigen Element (76), das schwenkbar in einer Büchse (78) aufgenommen ist; wobei die Hülse (78) becherförmig ist, mit einem Boden (82) und einer Seitenwand (84), die zumindest teilweise das kugelförmige Element (76) umgibt, wobei die Pumpe (10) **gekennzeichnet ist durch**: einen Magneten (80) in der Hülse (78) zum Halten des kugelförmigen Elements (76) in der Hülse (78) unter Ausnutzung einer magnetischen Kraft, wobei der Magnet (80) in dem Boden (78), an das kugelförmige Element angrenzend, angeordnet ist, wobei die Hülse (78) des weiteren einen Ring (88) aus magnetischem Material geringen magnetischen Widerstands aufweist, der in der Seitenwand (84) getragen ist und das kugelförmige Element (76), umgibt.

2. Hochdruckpumpe mit geringem Förderstrom nach Anspruch 1, bei welcher der Kolben (12) aus einem Kristallmaterial hergestellt ist.

3. Hochdruckpumpe mit geringem Förderstrom nach Anspruch 2, bei welcher der Kolben (12) aus Saphir hergestellt ist.

4. Hochdruckpumpe mit geringem Förderstrom nach Anspruch 1, bei welcher der Kolben (12) aus einem Mineral hergestellt ist.

5. Hochdruckpumpe mit geringem Förderstrom nach Anspruch 4, bei welcher der Kolben (12) aus Zircon hergestellt ist.

6. Hochdruckpumpe mit geringem Förderstrom nach Anspruch 1, bei welcher das kugelförmige Element (76) das zweite Ende des Kolbenhalters (46) und die Hülse (78) Teil des Antriebssystems (26) ist.

7. Hochdruckpumpe mit geringem Förderstrom nach Anspruch 6, bei welcher der Motor (18) eine drehbare Antriebswelle (60) aufweist und das Antriebssystem (26) eine Antriebsübertragung (28) aufweist zum Umwandeln der drehenden Bewegung der Welle in eine lineare Bewegung der Hülse (78).

8. Hochdruckpumpe mit geringem Förderstrom nach Anspruch 7, bei welcher die Antriebsübertragung (28) einen Gewindeschaft (58) aufweist, der drehend von der Antriebswelle (60) des Motors angetrieben ist, sowie eine mit Gewinde versehene Antriebsmutter (70), die von dem Antriebssystem (26) getragen ist.

9. Hochdruckpumpe mit geringem Förderstrom nach Anspruch 1, bei welcher der Kolben (12) einen Durchmesser im Bereich von einem Millimeter bis etwa drei Millimeter hat.

## Revendications

1. Pompe à faible débit et à haute pression (10) pour chromatographie liquide à haute pression et analogue, qui comprend : une section de pompage (32) comprenant un cylindre de pompe (30) ; des passages (42, 44) permettant le passage d'un liquide pompé à l'intérieur et à l'extérieur dudit cylindre (30) ; un système de piston (24) comprenant un piston (12) pouvant effectuer un mouvement de va-et-vient à l'intérieur dudit cylindre (30), lequel système de piston (24) comprenant un support de piston (46) servant à supporter ledit piston (12) à une première extrémité dudit support de piston ; un moteur (18) ; et un système d'entraînement de piston (26) connecté entre ledit moteur (18) et la seconde extrémité dudit support de piston (46) afin de faire aller et venir ledit système de piston (24) suite à l'actionnement dudit moteur (18) ;
lequel piston (12) consiste en une tige mince et allongée dont le diamètre est inférieur à 10 mm, tandis que l'interconnexion entre ledit système d'entraînement (26) et ladite seconde extrémité dudit support de piston (46) consiste en un couplage de type articulation à rotule (74) comportant un élément sphérique (76) venant se loger de manière pivotante dans une rotule (78), ladite rotule (78) étant en forme de coupelle et possédant une base (82) ainsi qu'une paroi latérale (84) qui entoure au moins partiellement ledit élément sphérique (76) ;
laquelle pompe (10) est **caractérisée en ce qu'**un aimant (80) est monté dans ladite rotule (78) afin de maintenir ledit élément sphérique (76) dans ladite rotule (78) en exerçant une force magnétique, ledit aimant (80) se situant dans ladite base (78) à proximité dudit élément sphérique, tandis que ladite rotule (78) comprend en outre un anneau (88) fait d'un matériau magnétique à faible réluctance qui est supporté dans ladite paroi latérale (84) et qui entoure ledit élément sphérique (76).

2. Pompe à faible débit et à haute pression, telle que revendiquée dans la revendication 1, dans laquelle ledit piston (12) se compose d'un matériau cristallin.

3. Pompe à faible débit et à haute pression, telle que revendiquée dans la revendication 2, dans laquelle ledit piston (12) se compose de saphir.

4. Pompe à faible débit et à haute pression, telle que revendiquée dans la revendication 1, dans laquelle ledit piston (12) se compose d'un minéral.

5. Pompe à faible débit et à haute pression, telle que revendiquée dans la revendication 4, dans laquelle ledit piston (12) se compose de zircon.

6. Pompe à faible débit et à haute pression, telle que revendiquée dans la revendication 1, dans laquelle l'élément sphérique (76) constitue ladite seconde extrémité du support de piston (46), tandis que ladite rotule (78) fait partie dudit système d'entraînement (26).

7. Pompe à faible débit et à haute pression, telle que revendiquée dans la revendication 6, dans laquelle ledit moteur (18) comprend un arbre d'entraînement rotatif (60), tandis que ledit système d'entraînement (26) comprend une transmission d'entraînement (28) permettant de transformer le mouvement rotatif de l'arbre en un mouvement linéaire de ladite rotule (78).

8. Pompe à faible débit et à haute pression, telle que revendiquée dans la revendication 7, dans laquelle ladite transmission d'entraînement (28) comprend un arbre fileté (58) entraîné en rotation par ledit arbre d'entraînement du moteur (60), ainsi qu'un écrou d'entraînement fileté (70) supporté par ledit système d'entraînement (26).

9. Pompe à faible débit et à haute pression, telle que revendiquée dans la revendication 1, dans laquelle ledit piston (12) possède un diamètre qui se situe dans une plage d'environ 1 millimètre à environ 3 millimètres.
